(19) Europäisches Patentamt
European Patent Office
Office européen des brevets

(11) **EP 1 802 879 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(21) Anmeldenummer: **05779143.6**

(22) Anmeldetag: **15.08.2005**

(51) Int Cl.:
**F16D 41/10** *(2006.01)*

(86) Internationale Anmeldenummer:
**PCT/EP2005/054005**

(87) Internationale Veröffentlichungsnummer:
**WO 2006/040208 (20.04.2006 Gazette 2006/16)**

(54) **LASTDREHMOMENTSPERRE**

LOAD TORQUE LOCK

SYSTEME DE BLOCAGE DE COUPLE DE CHARGE

(84) Benannte Vertragsstaaten:
**DE FR IT**

(30) Priorität: **14.10.2004 DE 102004050043**

(43) Veröffentlichungstag der Anmeldung:
**04.07.2007 Patentblatt 2007/27**

(73) Patentinhaber: **ROBERT BOSCH GMBH**
**70442 Stuttgart (DE)**

(72) Erfinder:
• **DREWE, Ingo**
**77815 Buehl (DE)**
• **SCHNEIDER, Guido**
**58453 Witten (DE)**

(56) Entgegenhaltungen:
WO-A-03/054409 DE-C- 251 521
US-A- 212 880 US-A- 2 444 592
US-B1- 6 229 233

**Beschreibung**

Stand der Technik

Die Erfindung betrifft eine Lastdrehmomentsperre zum selbständigen Sperren lastseitiger Drehmomente nach dem Oberbegriff des Patentanspruchs 1.

Unter der Vielzahl der bekannten Lastdrehmomentsperren befindet sich unter anderem eine Gruppierung, deren physikalischer Sperreffekt auf ein Klemmbeziehungsweise Verkantungsprinzip beruht, wobei die Zuordnung zum Klemmen oder Verkanten nicht eindeutig sein muss.

Unter dieser Gruppierung ist es aus der US-PS 6 229 233 B1 bekannt, am Umfang einer gestellfesten Trommel einer Lastsperrkupplung mehrere Klemmrollen anzuordnen, die von einem Antriebsteil in eine neutrale Position bewegt werden und im Falle eines das Antriebsmoment übersteigenden Lastdrehmomentes von den Rampen eines Abtriebsteiles gegen die Wandung der Trommel gepresst werden. Dort bewirken sie eine Verklemmung zwischen dem Abtriebsteil und der Trommel, so dass die Kupplung derartige Lastdrehmomente sperrt. Da die Klemmrollen in der neutralen Position während des normalen Betriebes lose zwischen dem Abtriebsteil und dem Gehäuse angeordnet und lediglich durch eine Feder axial gehalten sind, verursachen sie im Normalbetrieb häufig unerwünschte Geräusche.

Aus der WO 03/054409 die eine Grundlage für Anspruch 1 bildet ist ferner eine Lastdrehmomentsperre bekannt, bei der mehrere Klemmbolzen an einer gestellfesten Sperringwandung beidseitig anliegen und mittels einer Sperrscheibe über Antriebs- oder Abtriebsmittel derart verschwenkbar sind, dass sie bei einem abtriebsseitigen Drehmoment an den Sperringwandungen verkanten und die Drehbewegung blockieren beziehungsweise bei einem antriebsseitigen Drehmoment sich von den Sperringwandungen lösen. Da die Klemmbolzen auf einem relativ großen Radius außerhalb der fluchtenden An- und Abtriebswellen an der von einem Gehäuse umgebenen Sperrringwandung angeordnet sind, ergibt sich hier ein systembedingter großer Einbauraum, was insbesondere im Fahrzeugbau problematisch sein kann.

Mit der vorliegenden Erfindung wird angestrebt, ein System zu entwickeln, welches die ureigenen Aufgaben einer Lastdrehmomentsperre gesamtheitlich erfüllt, die bei den bekannten Systemen nur im Einzelnen mehr oder weniger gut bewältigt werden. Hierzu gehören ein hohes Maß an Sperrbereitschaft, ein günstiges Verhältnis zwischen dem sperrbaren Drehmoment und dem benötigten Bauraum sowie eine minimale Verlustleistung beim antriebsseitigen Durchtreiben in beide Drehrichtungen. Außerdem wird angestrebt, eine Lastdrehmomentsperre zu realisieren, die auch noch eine besondere Laufruhe besitzt und dadurch die Geräuschentwicklung beim antriebsseitigen Durchtreiben auf ein Minimum reduziert.

Vorteile der Erfindung

Die erfindungsgemäße Lastdrehmomentsperre mit den im Kennzeichnungsteil des Patentanspruchs 1 aufgeführten Merkmalen hat den Vorteil, dass eine besonders kompakte Bauweise realisierbar ist, in dem die Angriffsmittel der Antriebswelle in die zentralen Öffnungen der Klemmkörper axial hineinragen. Ein weiterer Vorteil der erfindungsgemäßen Lösung ist, dass durch die kompakte Bauweise und die Anordnung der Klemmkörper im Zentrum der Lastdrehmomentsperre das Auftreten von Fliehkräften an den Klemmkörpern weitgehend vermieden wird, was zur Folge hat, dass eine derartige Lösung auch für schnell laufende Antriebe wie beispielsweise Elektromotoren zum Antrieb von Verstellsystemen mit hin- und hergehenden Komponenten bevorzugt anzuwenden ist.

Vorteilhafte Weiterbildungen und Verbesserungen der im Patentanspruch 1 angegebenen Merkmale ergeben sich durch die in den Unteransprüchen aufgeführten Maßnahmen. So ist es für eine axial möglichst kurz bauende Ausführung von Vorteil, wenn die Klemmkörper als Klemmringe ausgebildet sind, in deren Durchgangsbohrung jeweils einer der beiden Vorsprünge der Antriebswelle mit einem Verdrehwinkelspiel hineinragt.

Um trotz eines kompakten Bauraumes eine möglichst leistungsfähige Sperre von Lastdrehmomenten zu erzielen, wird in Weiterbildung der Erfindung vorgeschlagen, dass die Innenwandung der Gehäuseöffnung sowie die Außenwandung der beiden Klemmringe jeweils zwei axial nebeneinander liegende konisch verlaufende Klemmflächen haben, die V-förmig zueinander angeordnet sind. Dadurch werden die Klemmringe keilartig gegen die Innenwandung des gestellfesten Gehäuses gedrückt, so dass auch hohe Lastsperrmomente vom Gehäuse ohne Gehäuseverformungen aufgenommen werden können. Dabei ist es für eine möglichst gleichmäßige Klemmung an allen Klemmflächen vorteilhaft, wenn die V-förmig zueinander angeordneten Klemmflächen jeweils durch eine Zylindermantelfläche voneinander beabstandet sind. Da diese Zylindermantelflächen keine Klemmflächen bilden, können sie anderweitig genutzt werden. So ist es besonders vorteilhaft, wenn die Klemmringe am Außenumfang im Bereich ihrer Zylindermantelfläche mit einer nutförmigen Vertiefung versehen werden, in die jeweils ein Schenkel eines zwischen Abtriebswellenfortsatz und den Klemmringen eingesetzten zweischenkligen Federelementes eingreift. Die Vertiefung wird dabei so dimensioniert, dass der Schenkel des Federelementes ohne radialen Überstand darin angeordnet ist. Diese Lösung hat den weiteren Vorteil, dass der Kraftfluss bei hohen Sperrmomenten ausschließlich über die V-förmig angeordneten Klemmflächen beziehungsweise über die Zylindermantelflächen erfolgt und damit das Federelement aus diesem Kraftfluss entkoppelt ist. Gleichzeitig bleibt jedoch die Federkraft der Schenkel auf beide Klemmringe aufrecht erhalten. Dadurch wird die Sperrbereitschaft der Klemmringe in jedem Betriebszustand gewährleistet.

Da die Abtriebswelle mit einem axial vorstehenden Fortsatz sehnenartig am Umfangsbereich der Gehäuseöffnung in diese hineinragt und dort mit den Klemmringen in Wirkverbindung steht, wird zur Erzielung einer möglichst geringen Unwucht dieses Fortsatzes vorgeschlagen, in diesen Fortsatz der Abtriebswelle mindestens eine axiale Durchgangsbohrung, vorzugsweise mehrere nebeneinander liegende Durchgangsbohrung vorzusehen. Dabei ist es besonders vorteilhaft, wenn die mittlere Durchgangsbohrung mit einem radial nach innen gerichteten Durchbruch versehen ist, in den ein ösenförmiger mittlerer Abschnitt des Federelementes verschwenkbar aufzunehmen ist.

Durch das erfindungsgemäße Eingreifen der zapfenförmig ausgebildeten Vorsprünge der Antriebswelle in die Öffnungen der Klemmkörper beziehungsweise Klemmringe erhält man auf der dem Abtriebswellenfortsatz diametral gegenüberliegenden Seite der beiden Klemmringe einen freien Bauraum im Gehäuse der Lastdrehmomentsperre. Dieser freie Bauraum lässt sich in Weiterbildung der Erfindung vorteilhaft für die lose Anordnung eines Führungselementes in der Gehäuseöffnung verwenden, welches an der Innenwandung der Gehäuseöffnung sowie an den Außenwandungen der beiden Klemmringe anliegt. Das Führungselement weist dabei zweckmäßiger Weise eine dreieckförmige Kontur auf, wobei es mit einer konvexen Außenseite flächig an der Gehäuse-Innenwandung anliegt und mit zwei zum Gehäusezentrum gerichteten, zueinander symmetrisch konkaven Innenseiten jeweils an den Außenflächen einer der beiden Klemmringe flächig anliegt. Zweckmäßigerweise ist auch hier die konvexe Außenseite des Führungselementes mit zwei den Klemmflächen der Gehäuse-Innenwandung angepassten V-förmigen Flächen, sowie einem dazwischen liegenden zylindrischen Abschnitt versehen und die zwei konkaven Innenseiten des Führungselementes weisen ebenfalls jeweils zwei den Klemmflächen der Klemmringe angepasste V-förmige Flächen mit einem dazwischen liegenden zylindrischen Abschnitt auf.

Eine weitere Ausgestaltung der Erfindung besteht darin, dass die konkaven Flächen des Führungselementes über den Bereich der Berührungsstelle der Klemmringe miteinander hinausgehen und in diesem Bereich ein Verbindungsfenster aufweisen, in welchem die beiden Klemmringe aneinander anliegen. Durch die V-förmige Anordnung der Klemmflächen und der Außenseiten des Führungselementes ergibt sich neben der kompakten Bauweise eine axiale Zentrierung der Klemmringe und des Führungselementes im Gehäuse, so dass keine zusätzlichen axialen Gegenlauflagerungen benötigt werden. Damit besitzt das System eine sehr geringer Verlustreibung beim antriebsseitigen Durchtreiben sowie eine hohe Sperrbereitschaft. Desweiteren wird durch das Führungselement eine Stabilisierung der beim antriebsseitigen Durchtreiben notwendigen Bewegung der Klemmringe erzielt und ein besonders ruhiger und geräuscharmer Lauf realisiert. Durch die vorgeschlagene Gestaltung und Anordnung des Federelementes im System wird ferner sichergestellt, dass das Federelement auch unter Schüttelbeschleunigungen die gewünschte mittige Krafteinleitung für die Vorspannung der Klemmringe beibehält.

Zeichnung

Die Erfindung wird im Folgenden beispielhaft anhand der Figuren näher erläutert. Es zeigen

Figur 1 eine Lastdrehmomentsperre mit ihren Einzelteilen in geöffnetem Zustand in raumbildlicher Darstellung mit Blick von der Antriebsseite,
Figur 2 die gleiche Lastdrehmomentsperre mit den Einzelteilen in raumbildlicher Darstellung mit Blick von der Abtriebsseite,
Figur 3 und 4 zeigen die Lastdrehmomentsperre zusammengebaut in raumbildlicher Darstellung jeweils mit einem Ausbruch in raumbildlicher Darstellung,
Figur 5 zeigt die Lastdrehmomentsperre in der Draufsicht von der Abtriebsseite,
Figur 6 die Lastdrehmomentsperre im Querschnitt nach der Linie B-B aus Figur 5,
Figur 7 die Lastdrehmomentsperre in der Draufsicht im Schnitt A-A aus Figur 8 in neutraler Stellung,
Figur 8 die Lastdrehmomentsperre in der Seitenansicht,
Figur 9 die Lastdrehmomentsperre im Querschnitt beim antriebsseitigen Durchtreiben entgegen dem Uhrzeigersinn,
Figur 10a zeigt sie beim Sperren im Uhrzeigersinn,
Figur 10b einen vergrößerten Ausschnitt aus Figur 10a,
Figur 10c einen Vektorzug der Kräfte beim Sperren und
Figur 11 zeigt sie beim Lösen der Klemmringe durch eine antriebsseitige Drehbewegung gegen den Uhrzeigersinn.

Beschreibung des Ausführungsbeispieles

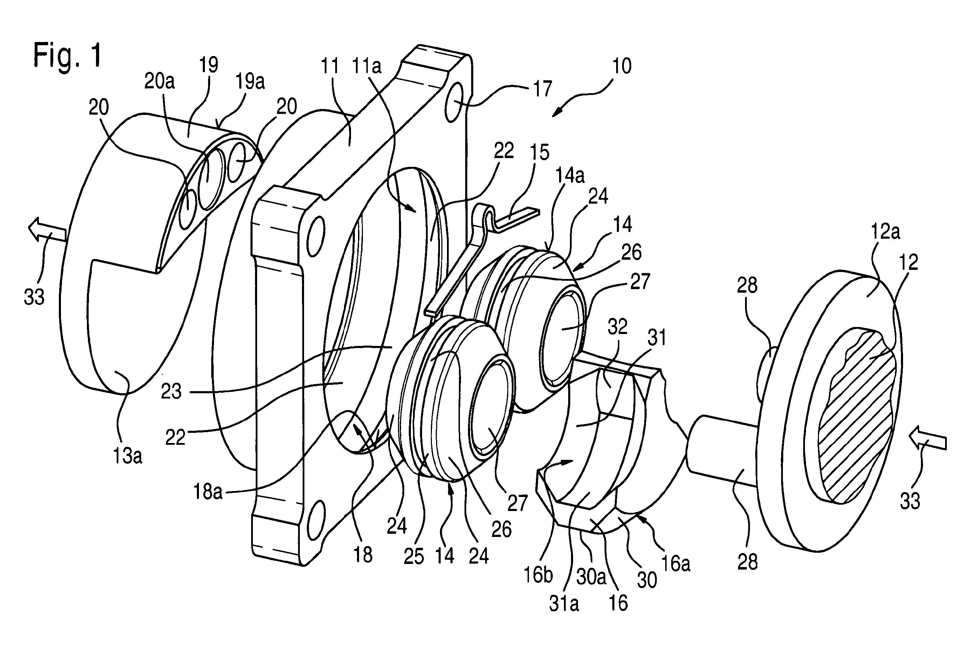

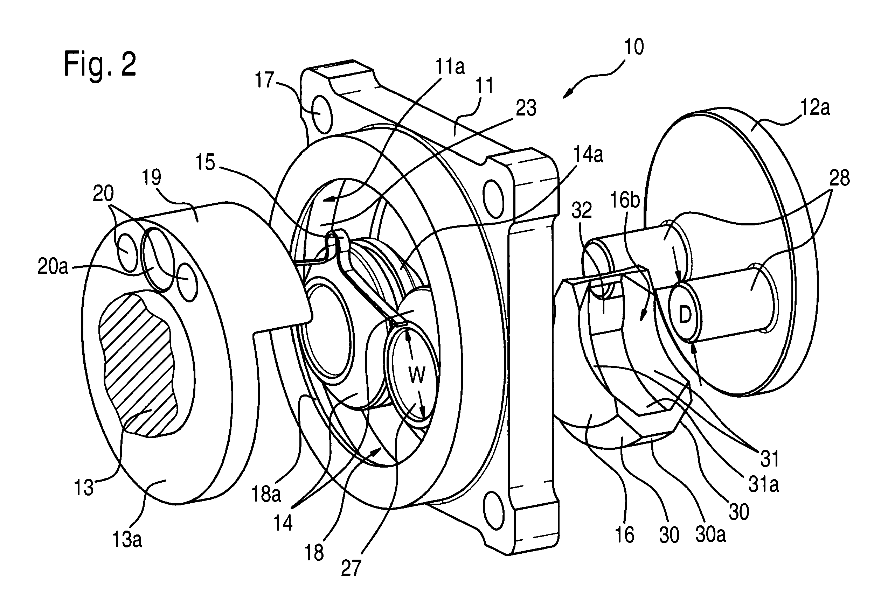

Die Figuren 1 und 2 zeigen eine mit 10 bezeichnete Lastdrehmomentsperre im geöffneten Zustand mit ihren explosionsartig angeordneten Bauelementen mit Blick auf ihre Antriebsseite beziehungsweise Abtriebsseite. Sie besteht aus einem Gehäuse 11, einer Antriebswelle 12, einer Abtriebswelle 13, aus zwei als Klemmringe 14 ausgebildeten Klemmkörpern, einem Federelement 15 sowie einem Führungselement 16.

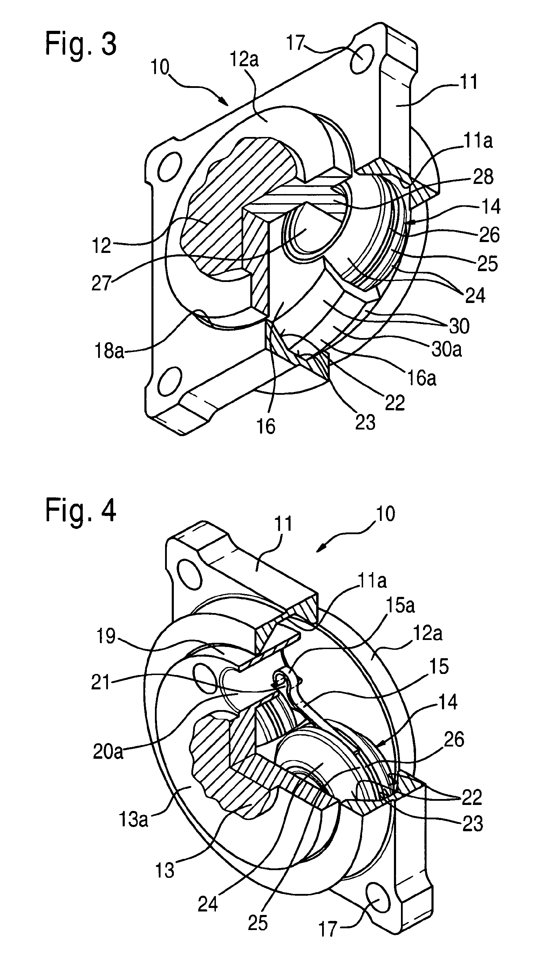

Die Figuren 3 und 4 zeigen die Lastdrehmomentsperre 10 im zusammengebauten Zustand mit jeweils einem Ausbruch des Gehäuses 11 und der Antriebswelle 12 beziehungsweise der Abtriebswelle 13 mit Blick auf die Klemmringe 14, dem Federelement 15 beziehungsweise dem Führungselement 16.

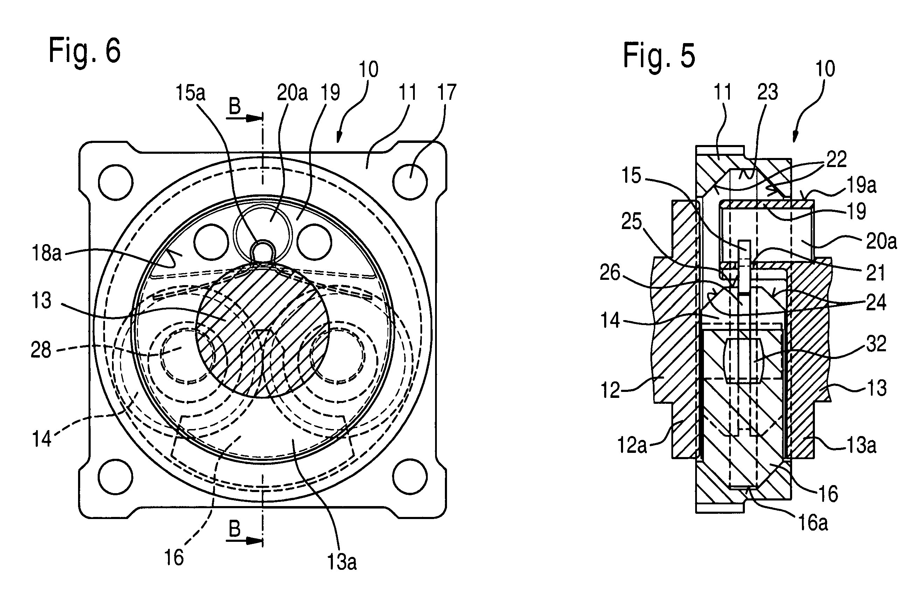

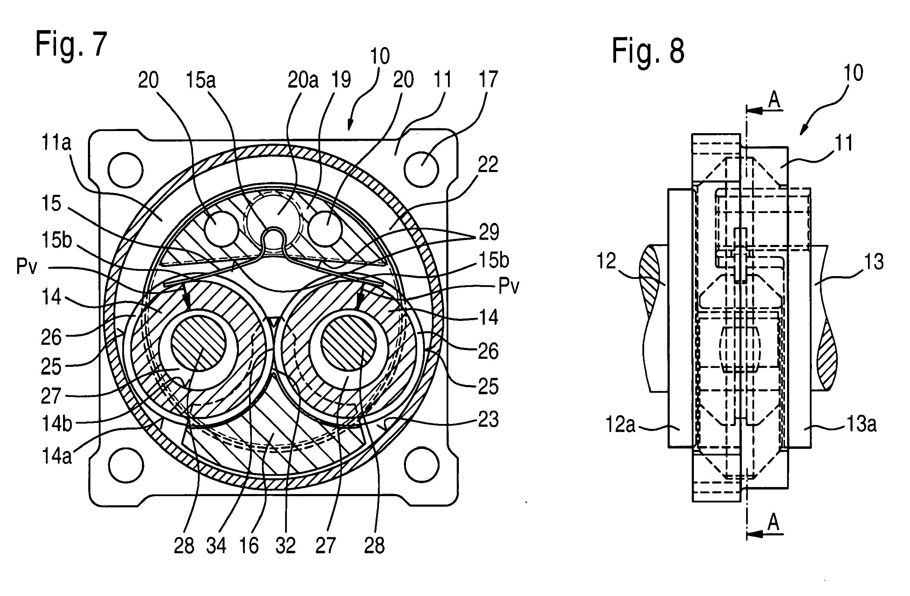

Die Figuren 5 und 7 zeigen die Lastdrehmomentsperre in der Vorderansicht von der Abtriebsseite her und die Figuren 6 und 8 zeigen jeweils dazu die Seitenansicht. Figur 6 zeigt einen Längsschnitt nach der Linie B-B aus Figur 5 und Figur 7 zeigt die Vorderansicht in einem Querschnitt nach der Linie A-A aus Figur 8

Aus der Zusammenschau der Figuren 1 bis 8 ist erkennbar, dass das Gehäuse 10 mit Befestigungsbohrungen 17 versehen ist, mittels denen es gestellfest beispielsweise im Kraftfahrzeug festgeschraubt werden kann. Es hat ferner eine durchgehende zentrisch angeordnete Gehäusebohrung 18, in die antriebsseitig ein scheibenförmiger Endabschnitt 12a der an einem Gestell drehbar gelagerten, abgebrochen angedeuteten Antriebswelle 12 hineinragt. Auf der Abtriebsseite ragt ein scheibenförmiger Endabschnitt 13a einer ebenfalls am Gestell drehbar gelagerten, abgebrochen dargestellten Abtriebswelle 13 in die kreisrunde Gehäuseöffnung 18. Antriebs- und Abtriebswelle sind vereinfacht dargestellt und verfügen in der Regel nach Einsatzfall über weitere Wellenabsätze oder Wellenanschlüsse, welche die Weiterleitung der Drehbewegungen und die Lagerungen der Welle übernehmen. An- und Abtriebswelle sind in axialer Richtung fest gelagert und besitzen daher nur Bewegungsfreiheiten in beiden Drehrichtungen um ihre geometrische Mittelachse. Die Abtriebswelle 13 hat ferner an ihrem Endabschnitt 13a einen axial vorstehenden, rotationsasymmtrisch am Umfang angeordneten Fortsatz 19, der sehnenartig am Umfangsbereich der Gehäuseöffnung 18 in diese abtriebsseitig hineinragt. Zum Ausgleich der dadurch entstehenden Unwucht ist der Fortsatz 19 der Abtriebswelle 13 mit drei nebeneinander liegenden Durchgangsbohrungen 20 versehen, um den Schwerpunkt der Abtriebswelle 13 möglichst dicht zur Drehachse zu verlagern. Außerdem können diese Durchgangsbohrungen 20 als Vorratskammern für einen Schmierstoff genutzt werden. Die mittlere Durchgangsbohrung 20a hat einen radial nach innen gerichteten Durchbruch 21, in den ein ösenförmiger mittlerer Abschnitt 15a des Federelementes 15 eingerastet wird und leicht verschwenkbar aufgenommen ist.

Die beiden Klemmringe 14 sind in der Gehäuseöffnung 18 außermittig nebeneinander liegend angeordnet, wobei sie mit ihren Außenflächen 14a einerseits an der Innenwandung 18a der Gehäuseöffnung und andererseits aneinander anliegen. Sie werden durch das zwischen dem Fortsatz 19 und den Klemmringen 14 eingesetzte Federelement 15 in ihre in Figur 7 dargestellte neutrale Position gehalten. Im Inneren des Gehäuses 11 ist die Innenwandung 18a der Gehäuseöffnung 18 mit zwei ringförmigen Klemmflächen 22 versehen, die zueinander V-förmig angeordnet sind und so im Gehäuse 11 eine V-förmige Ringnut 11a bilden. Die Klemmflächen 22 sind dabei durch eine Zylindermantelfläche 23 voneinander beabstandet. Entsprechend angepasst ist auch die Außenwandung 14a der beiden Klemmringe 14 mit jeweils zwei axial nebeneinander liegenden, konisch verlaufenden Klemmflächen 24 versehen, die mit den Klemmflächen 22 des Gehäuses 11 zusammenwirken und somit dementsprechend V-förmig zueinander angeordnet sind. Auch hier sind die Klemmflächen 24 jeweils durch eine Zylindermantelfläche 25 voneinander beabstandet. Außerdem haben die Klemmringe 14 am Außenumfang im Bereich ihrer Zylindermantelfläche 25 jeweils eine nutförmige, umlaufende Vertiefung 26, welche auf die Breite und Dicke des Federelementes 15 so abgestimmt ist, dass das spangenförmig ausgebildete Federelement 15 mit seinen Schenkeln 15b ohne radialen Überstand in die Vertiefungen einzugreifen vermag.

Die Klemmringe 14 haben jeweils eine als Durchgangsbohrung 27 ausgebildete Öffnung, in welche jeweils ein Angriffsmittel der Antriebswelle 13 axial hineinragt. Die Angriffsmittel der Antriebswelle 13 werden durch zwei außermittig an der Stirnseite des Antriebswellen-Endabschnittes 12a angeordnete zapfenförmige Vorsprünge 28 ausgebildet, deren Dicke D kleiner als die Öffnungsweite W der Durchgangsbohrungen 27 der Klemmringe 14 ist und die in neutraler Stellung gemäß Figur 7 die Klemmringe 14 nicht berühren. Die Durchgangsbohrungen 27 der Klemmringe 14 bilden somit im Inneren der Klemmringe einen Freiraum, in den jeweils ein zapfenförmiger Vorsprung 28 der Antriebswelle 12 in axialer Richtung hineinragt.

Der in die Gehäuseöffnung 18 ragende Fortsatz 19 der Abtriebswelle 13 hat eine der Gehäuseöffnung 18 angepasste gekrümmte Umfangsfläche 19a an seiner Außenseite. Auf seiner zum Zentrum der Gehäuseöffnung 18 gerichteten Innenseite ist er für jeden der beiden Klemmringe 14 mit einer Andrückfläche 29 versehen, die jeweils mit einer Zylindermantelfläche 25 eines Klemmringes 14 zur Anlage gebracht werden kann.

In dem in Umfangsrichtung zwischen den beiden Klemmringen 14 verbleibenden unteren Freiraum der Gehäuseöffnung 18 befindet sich das Führungselement 16. Es hat eine dreieckförmige Kontur und liegt mit einer konvexen Außenseite flächig an der Gehäuse-Innenwandung 18a an. Dabei bildet die Außenseite des Führungselementes 16 zwei V-förmig angeordnete Führungsflächen 30, die den Klemmflächen des Gehäuses 11 derart konvex gekrümmt angepasst sind, dass sie an den entsprechend konkav gekrümmten Klemmflächen 22 des Gehäuses 11 flächig lose anliegen. Die beiden zum Gehäusezentrum gerichteten, zueinander symmetrisch angeordneten konkaven Innenseiten 16b des dreieckförmigen Führungselementes 16 haben ebenfalls zwei V-förmig angeordnete Führungsflächen 31, welche derart konkav gekrümmt sind, dass sie jeweils an den entsprechenden Klemmflächen 24 der Klemmringe 14 flächig lose anliegen. Die paarweise zueinander konisch angeordneten Führungsflächen 30 und 31 sind dabei ebenfalls durch jeweils einen dazwischen liegenden zylindrischen Abschnitt 30a, 31 a voneinander beabstandet. Da das dreieckförmige Führungselement 16 symmetrisch aufgebaut ist, werden die beiden Klemmringe 14 in gleichen Geometrieformen des Führungselementes 16 aufgenommen und geführt. Die konkaven Führungsflächen 31 des Führungselementes 16 sind hier über den Bereich der Berührungsstelle 34 der Klemmringe 14 miteinander soweit hinausgeführt, dass sich in der Symmetrieebene des Führungselementes 16 die Führungsflächen 31 und ihre zylindrischen Abschnitte 31a bereichsweise überschneiden und in diesem Bereich ein Verbindungsfenster 32 ausbilden, in welchem die beiden Klemmringe 14 aneinander anliegen. Damit wird der zum Sperren eines Lastdrehmomentes notwendige Kontakt zwischen den Klemmringen 14 im Bereich ihrer Zylindermantelfläche 25 ermöglicht. Das Führungselement 16 umschließt somit bereichsweise die Klemmringe 14 mit einem geringen Abstand, wobei in den entstehenden Spalten zwischen den Führungsflächen 30 und 31 des Führungselementes 16 und den Klemmflächen 22 und 24 des Gehäuses 11 und der Klemmringe 14 bei einer Fettfüllung sich Schmierstofffilme bilden können.

Im Folgenden wird nun die Wirkungsweise der Lastdrehmomentsperre 10 näher erläutert. Dabei zeigt Figur 7 den neutralen Zustand der Drehmomentsperre, der immer dann gegeben ist, wenn an der An- und Abtriebswelle kein Drehmoment wirksam ist. In diesem Zustand wird durch die Federkraft des Federelementes 15 an den Enden seiner Schenkel 15b eine Vorspannkraft Pv an der Vertiefung 26 der Zylindermantelflächen 25 beider Klemmringe 14 wirksam, mit der die Klemmringe 14 gegen die V-förmigen Klemmflächen des Gehäuses 11 in die dargestellt Position gedrückt werden. Die Klemmringe 14 werden außerdem im Bereich des Verbindungsfensters 32 im Führungselement 16 gegeneinander gedrückt, so dass sich ihre Zylindermantelflächen 25 an der Stelle 34 berühren. Das Federelement 15 sorgt somit für eine ständige Sperrbereitschaft des Systems, in dem es die Klemmringe 14 in jeder beliebigen Umfangsposition in Kontakt zu ihren Nachbarbauteilen hält. In diesem neutralen Zustand der Drehmomentsperre haben außerdem die beiden zapfenförmigen Vorsprünge 28 am Endabschnitt 12a der Antriebswelle 12 in den größer dimensionierten Durchgangsbohrungen 27 der Klemmringe 14 ein gewisses Drehwinkelspiel, bevor sie die Innenwandung 14b der Durchgangsbohrungen 27 der Klemmringe 14 berühren können. Ferner hat auch der axiale Fortsatz 19 der Abtriebswelle 13 mit seinen Andrückflächen 29 jeweils einen Abstand zu den Zylindermantelflächen 25 der Klemmringe 14, so dass auch hier ein Drehwinkelspiel zwischen Abtriebswelle 13 und Klemmringe 14 gebildet wird. Dieses Drehwinkelspiel ist dabei etwas größer ausgelegt als das Drehwinkelspiel der Antriebswelle 12 zu den Klemmringen 14.

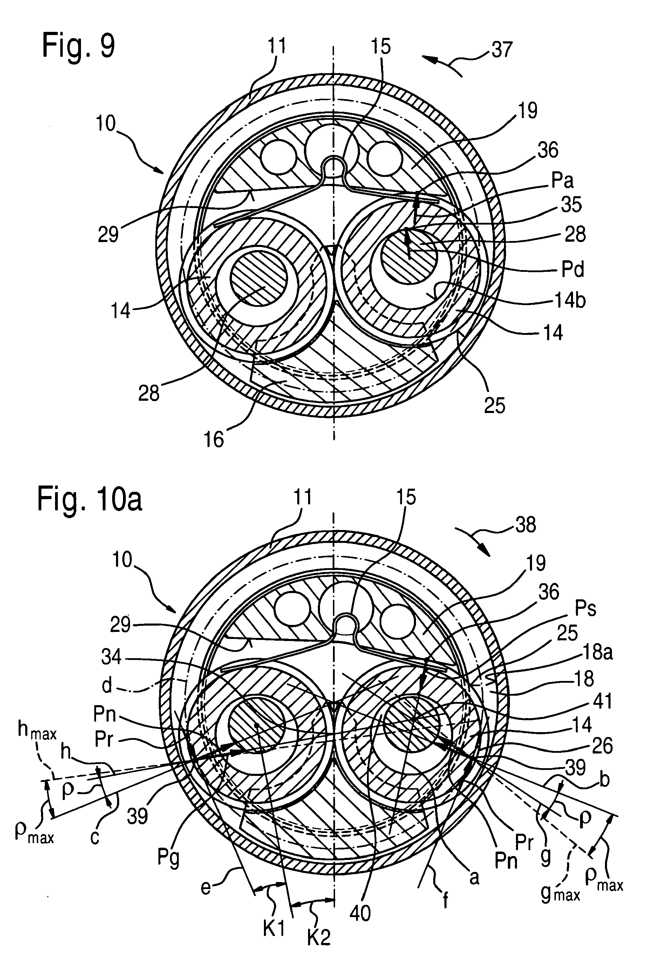

Mit Hilfe der Figur 9 wird nunmehr die Wirkungsweise der Lastdrehmomentsperre 10 bei einem antriebsseitig wirksamen Drehmoment zum Durchtreiben einer Kraft erläutert, die von der Antriebsseite auf die Abtriebsseite übertragen wird und wie es in Figur 1 durch Kraftrichtungspfeile 33 angedeutet ist. Gemäß Figur 9 wird dabei das zu übertragende Drehmoment entgegen dem Uhrzeigersinn von der Antriebswelle 12 auf die Abtriebswelle 13 übertragen. Durch die Drehung der Antriebswelle 12 gelangt dabei zunächst der rechte zapfenförmige Vorsprung 28 im Berührungspunkt 35 mit der Innenwandung 14b des rechten Klemmringes 14 zur Anlage. Dort tritt nun eine Drehkraft Pd auf, die der in Figur 7 dargestellten Vorspannkraft Pv des Federelementes 15 entgegenwirkt und den rechten Klemmring 14 mit seiner Zylindermantelfläche 25 im Berührungspunkt 36 gegen die rechte Andrückfläche 29 des axialen Fortsatzes 19 drückt. Mit der dort wirksamen Andrückkraft Pa wird nunmehr die Abtriebswelle 13 mit dem axialen Fortsatz 19 innerhalb der Gehäuseöffnung 18 gegen den Uhrzeigersinn gedreht. Über das Federelement 15 wird dabei der linke Klemmring 14 sowie das Führungselement 16 mitgenommen. Das Führungselement 16 liegt dabei mit seinen äußeren Führungsflächen 30 lose an den Klemmflächen 22 des Gehäuses 11 an. Ebenso liegen die beiden Klemmringe 14 lose aneinander sowie an den Führungsflächen 31 des Führungselementes 16 an. Das gesamte System dreht sich somit im Gehäuse 11 in Richtung des Pfeiles 37 links herum und überträgt damit das an der Antriebswelle 12 wirksame Drehmoment mit gleicher Drehzahl auf die Abtriebswelle 13.

Durch den symmetrischen Aufbau der Lastdrehmomentsperre 10 mit der symmetrischen Anordnung der beiden Klemmringe 14 wirkt die Lastdrehmomentsperre für beide Drehrichtungen der An- und Abtriebswellen in gleicher Weise. Dementsprechend wird folglich bei einem im Uhrzeigersinn wirkenden Antriebsdrehmoment der linke zapfenförmige Vorsprung 28 der Antriebswelle 13 mit dem linken Klemmring 14 in Wirkverbindung treten und diesen gegen die linke Andrückfläche 29 des axialen Fortsatzes 19 drücken, so dass sich dann das System im Uhrzeigersinn im Gehäuse 11 dreht und das Antriebsdrehmoment auf die Abtriebsseite überträgt.

Mit Hilfe der Figuren 10a bis 10c wird nunmehr die Funktion der Lastdrehmomentsperre 10 beim Auftreten eines im Uhrzeigersinn wirksamen Lastdrehmomentes erläutert. In diesem Fall wird der axiale Fortsatz 19 von dem an der Abtriebswelle 13 wirksamen Lastdrehmoment in Richtung des Pfeiles 38 soweit verschwenkt, bis seine rechte Andrückfläche 29 im Berührungspunkt 36 an der Zylindermantelfläche 25 des rechten Klemmrings 14 zur Anlage kommt. Dort tritt nunmehr eine Sperrkraft Ps auf, welche den rechten Klemmring 14 nach unten drückt. Da beide Klemmringe 14 mit Hilfe des Federelementes 15 im Berührungspunkt 34 aneinander liegen, werden sie nunmehr gemeinsam gegen die Innenwandung 18a der Gehäuseöffnung 18 gedrückt. In Figur 10a sind dabei die relevanten Kraftwirkungslinien beim Sperren über den rechten Klemmring 14 graphisch dargestellt. Die Wirkungslinie a der Sperrkraft Ps verläuft dabei lotrecht zur rechten Andrückfläche 29 des geschwenkten Fortsatzes 19 sowie durch den Mittelpunkt des rechten Klemmringes 14. Das Federelement 15 liegt dabei mit seinem Schenkel in der Vertiefung 26 und ist damit aus dem Kraftfluss über die Wirkungslinie a entkoppelt. Beide Klemmringe 14 stützen sich über ihre V-förmig angeordneten Klemmflächen 24 an den ihnen zugeordneten Klemmflächen 22 des Gehäuses 11 ab. Die in die Zeichnungsebene projizierten Normalkräfte Pn dieser Abstützung liegen auf den Wirkungslinien b und c, welche jeweils durch den Mittelpunkt eines Klemmrings 14 und dem Mittelpunkt der Gehäuseöffnung 18 verlaufen. Der vom Lastdrehmoment angestrebten Rechtsdrehung des Systems treten am strichpunktiert angedeuteten mittleren Umfang d der Klemmflächen 22 und 24 Reibungskräfte Pr entgegen, die auf den tangentialen Wirkungslinien e und f am Umfang d liegen. Die Klemmringe 14 blockieren hier das Drehen des Systems durch eine sogenannte Verkantung zwischen ihren Kontaktstellen zum Gehäuse 11, solange in ihrem Berührungspunkt 34 zwischen den beiden Klemmringen 14 kein Gleiten auftritt. Für ein derartiges Verkanten müssen die Reibungskräfte Pr in einer für ein Gleichgewicht notwendigen Höhe auftreten, ohne dabei ihre durch die Reibungswinkel $\zeta_{max}$ bestimmte Höchstgrenze zu überschreiten. Die Normal- und Reibungskräfte Pn und Pr lassen sich an der Kontaktstelle 39 der Klemmringe 14 mit dem Gehäuse 11 durch vektorielle Addition zu einer Gesamtkraft Pg zusammenfassen, welche auf den Wirkungslinien $g_{max}$ und $h_{max}$ liegen.

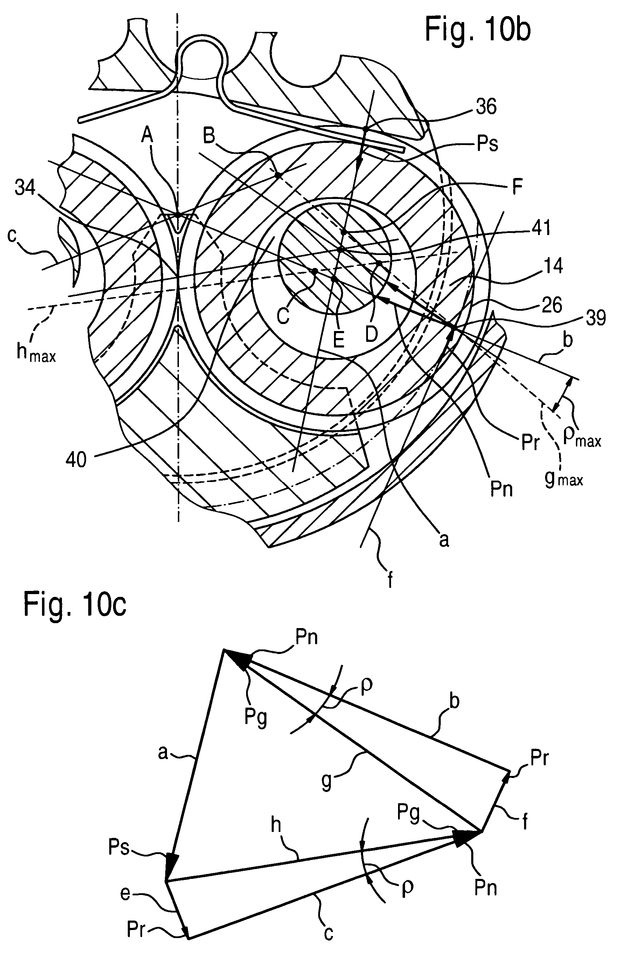

In den Figuren 10a bis 10c sind weiterhin folgende Sachverhalte für die Verkantung graphisch dargestellt. Unter der Belastung durch die Sperrkraft Ps treten die Reibungskräfte Pr entlang der Wirkungslinien e und f nur in der Höhe auf, wie sie für einen Gleichgewichtszustand erforderlich sind. Die beiden sich ergebenden Gesamtkräfte Pg müssen das Gleichgewicht zur Sperrkraft Ps herstellen. Für das mechanische Momentengleichgewicht müssen sich die Wirkungslinien h und g der Gesamtkräfte Pg und die Wirkungslinie a der Sperrkraft Ps in einem geometrischen Punkt schneiden. Begründung: Alle drei Kräfte sind existent und ihre Wirkungslinien nicht deckungsgleich und dürfen somit relativ zueinander keinen Hebelarm besitzen. Dies ist nur der Fall, wenn ihre Wirkungslinien sich in einem Punkt schneiden. Bei der in Figur 10a dargestellten Lage der Wirkungslinie a für die Sperrkraft Ps können beispielsweise die Gesamtkräfte Pg, wie in Figur 10a eingezeichnet, auf den Wirkungslinien h und g liegen. Allerdings können aber auch alle beliebigen anderen Winkellagen der Gesamtkräfte Pg innerhalb eines maximalen Reibungswinkels $\zeta_{max}$ zum Gleichgewichtszustand führen. Entscheidend ob ein Gleichgewichtszustand, sprich ein Verkanten der Klemmringe 14 beim Auftreten eines Lastmomentes eintritt ist, dass die Wirkungslinie a der Sperrkraft Ps des Fortsatzes 19 durch die Schnittfläche 40 - mit den Eckpunkten A, B, C, und D in Figur 10b - beider Reibungswinkel $\zeta_{max}$ verläuft. Begründung: Die Schnittfläche 40 stellt die Summe aller geometrischen Punkte dar, in denen sich die Wirkungslinien h, g und a schneiden können, ohne dass eine der beiden Reibungsbedingungen (Coulomsche Reibung Pr $\leq$ Pn x $\mu$; das heißt graphisch: Wirkungslinie h und g liegen innerhalb von $\zeta_{max}$) verletzt wird. Dies ist die Voraussetzung für das Momentengleichgewicht.

Im Ausführungsbeispiel nach Figur 10a wird die Gleichgewichtslage dadurch erzielt, dass sich die Wirkungslinie a der abtriebsseitigen Sperrkraft Ps und die Wirkungslinien g und h der Gesamtkräfte Pg beispielsweise im geometrischen Punkt 41 schneiden. Beide Kräftegleichgewichte werden geometrisch durch die geschlossenen Vektorzüge in Figur 10c aus beiden Gesamtkräften Pg und der Sperrkraft Ps abgebildet und nachgewiesen. Wie in Figur 10b ersichtlich, wäre für die dargestellte Lage der Wirkungslinie a aber auch jeder Punkt auf der Linie zwischen E und F als Schnittpunkt möglich. Wo der Schnittpunkt der Wirkungslinien g, h und a auf der Strecke zwischen E und F liegt, hängt von Sperrfall zu Sperrfall davon ab, wie sich die Reibungskräfte auf die beiden Kontaktstellen 34 und 39 verteilen, das heißt wie groß jeweils der sich innerhalb des möglichen Bereiches ($0 \leq \zeta \leq \zeta_{max}$) tatsächlich einstellende Reibungswinkel $\zeta$ ist.

Im Unterschied zu normalen zylindrischen Freilaufrollen entstehen bei den vorliegenden Klemmringen 14 mit ihren konischen, axial symmetrisch V-förmig angeordneten Klemmflächen 24 einerseits und ihrer gegenseitigen Abstützung an ihren Zylindermantelflächen 25 andererseits unterschiedliche Klemmwinkel K1 und K2 zum Mittelpunkt der Klemmringe 14. Der Grund hierfür sind ausgehend vom Mittelpunkt der Klemmringe die unterschiedlichen Radien zu den Kontaktstellen 39 am Gehäuse 11 einerseits und zum Berührungspunkt 34 miteinander andererseits. Setzt man gleich große sich einstellende Reibungswinkel $\zeta$ an den Kontaktstellen 39 und dem Berührungspunkt 34 voraus, so muss für ein sicheres Verklemmen der Klemmringe 14 untereinander der größere Klemmwinkel von beiden kleiner als der maximale Reibungswinkel $\zeta_{max}$ sein. Somit gilt:

$$K1 < K2 \leq \varsigma_{max}$$ anderenfalls würden die Klemmringe 14 vom Fortsatz 19 der Abtriebswelle 13 ohne Verkantung mitgenommen.

Eine Vernachlässigung der restlichen Federkraft des Federelementes 15 ist hierbei zulässig, da diese das Verklemmen beziehungsweise Verkanten nur weiter unterstützt. In der dargestellten Weise werden abtriebsseitig eingeleitete Drehbewegungen blockiert und die Abtriebswelle 13 in ihrer Position fixiert. Gleichermaßen wird die Antriebswelle 12 vor abtriebsseitigen Drehmomenten geschützt, da diese zum Gehäuse 11 hin abgeleitet werden und nicht über die Vorsprünge 28 an die Antriebswelle 12 weitergeleitet werden. Durch die V-förmig angeordneten Klemmflächen 22 und 24 können mit dieser Lastdrehmomentsperre 10 wesentlich größere Drehmomente gesperrt werden als bei zylindrischen Freilaufrollen, da ein Teil der am Gehäuse 11 abgestützten Kräfte in beide axiale Richtungen weisen und somit radiale Aufweitungen am Gehäuse 11 verkleinert werden.

Aufgrund der symmetrischen Ausbildung und Anordnung der Bauelemente dieser Lastdrehmomentsperre 10 werden Lastdrehmomente für beide Drehrichtungen der Abtriebswelle 13 in gleicher Weise vom Gehäuse 11 aufgenommen. So wird bei einem entgegen dem Uhrzeigersinn wirksamen Lastdrehmoment der axiale Vorsprung 19 der Abtriebswelle 13 gegen den linken Klemmring gedrückt, so dass nunmehr dort die Sperrkraft Ps auftritt und die beiden Klemmringe 14 durch eine sogenannte Verkantung die Drehbewegung blockieren.

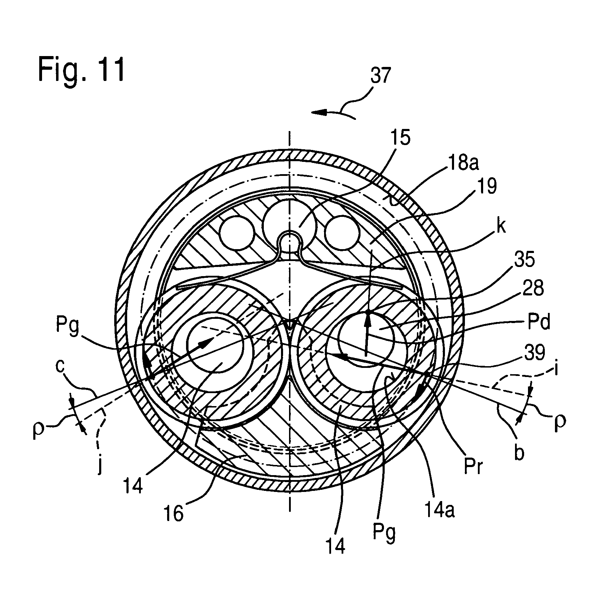

Mit Hilfe der Figur 11 wird nunmehr das Lösen der Klemmringe 14 von der Innenwandung 18a des Gehäuses 11 bei einem Wegfall des Lastdrehmomentes erläutert. Dabei wird zunächst durch die Kraft des Federelementes 15 der axiale Fortsatz 19 der Abtriebswelle 13 in eine neutrale Stellung zurückgedreht, in der er zu den beiden Klemmringen 14 einen etwa gleich großen Abstand hat. Durch Drehung der Antriebswelle 12 in Richtung des Pfeiles 37 werden nun die beiden zapfenförmigen Vorsprünge 28 der Antriebswelle 12 soweit verschenkt, bis der rechte Vorsprung 28 an der Innenwandung 14b des rechten Klemmrings 14 anliegt. Am dortigen Berührungspunkt 35 tritt nunmehr eine Drehkraft Pd auf, die den rechten Klemmring 14 entgegen der Kraft des Federelementes 15 anzuheben versucht. Da an den Kontaktstellen 39 der Klemmringe 14 mit dem Gehäuse 11 die dort auftretenden Reibungskräfte Pr nunmehr eine umgekehrte Richtung haben, ist das System nicht mehr im Gleichgewicht zu halten. Dabei ergeben sich beispielsweise aufgrund der Reibungswinkel ζ für die Gesamtkraft Pg die Wirkungslinien i und j. Da sich diese Wirkungslinien nicht mehr in einem Punkt mit der Wirkungslinie k der Drehkraft Pd schneiden, wird die Verkantung der Klemmringe 14 nunmehr gelöst. Die Klemmringe 14 und das Führungselement 16 sind nunmehr lose innerhalb der Gehäuseöffnung 18 des Gehäuses 11 angeordnet und werden durch das Federelement 15 zusammengehalten sowie durch die V-förmig angeordneten Klemmflächen 22, 24 des Gehäuses 11 und der Klemmringe 14 sowie den Führungsflächen 30 des Führungselementes 16 axial geführt. Bei einer weiteren antriebsseitigen Drehung in Richtung des Pfeiles 37 rotieren also auch hier alle inneren Bauteile des Systems um die Längsachse des Gehäuses 11. Dabei stützt das Führungselement 16 beide Klemmringe 14 über den zum Teil mit Schmierstoff gefüllten Spalt zwischen den Führungsflächen 30, 31 und den Klemmflächen 22, 24 ab, wodurch mehrachsige Taumelbewegungen der Klemmringe 14 verhindert werden. Auf diese Weise wird ein besonders ruhiger Lauf beim antriebsseitigen Durchtreiben erzielt.

Für eine kompakte Ausführung der Lastdrehmomentsperre 10 ist wesentlich, dass durch die Ausbildung der Klemmkörper in Form von Klemmringen 14 ein Freiraum für die zapfenförmig ausgebildeten Vorsprünge 28 der Antriebswelle geschaffen wurde. Damit wurde gleichzeitig innerhalb der Gehäuseöffnung 18 der benötigte Platz für das neuartige Führungselement 16 geschaffen. Das Führungselement 16 mit den konkaven Führungsflächen 31 zu den beiden Klemmringen 14 und den äußeren konvexen Führungsflächen 30 zum Gehäuse 11 bietet die Möglichkeit, die Klemmringe 14 beim antriebsseitigen Durchtreiben in einem großen Bereich zu umgeben und damit die Klemmringe 14 in ihrer Bewegung zu führen und zu stützen. In diesem Zusammenhang ist es ferner wichtig, dass durch die V-förmig angeordneten Klemmflächen 22 des Gehäuses 11 die radialen Verformungen beim Verklemmen der Klemmringe 14 erheblich verkleinert werden und ebenso die Klemmringe 14 als auch das Führungselement 16 selbst gestützt werden.

**Patentansprüche**

1. Lastdrehmomentsperre (10) zum selbständigen Sperren lastseitiger Drehmomente bei Ab- oder Wegfall eines antriebsseitigen Drehmomentes unter Beibehaltung der Übertragungsmöglichkeit antriebsseitiger Drehmomente von einer Antriebswelle (12) auf eine Abtriebswelle (13) der Drehmomentsperre, bestehend aus einem gestellfesten Gehäuse (11) mit einer zentrischen Gehäusebohrung (18), mit einer drehbar gelagerten Antriebswelle, welche mit axial vorstehenden Angriffsmitteln (28) in die Gehäusebohrung antriebsseitig hineinragt, mit einer drehbar gelagerten Abtriebswelle, welche mit einem axial vorstehenden Fortsatz (19) sehnenartig am Umfangsbereich der Gehäusebohrung abtriebsseitig in diese hineinragt und mit zwei außermittig in der Gehäusebohrung nebeneinander angeordneten Klemmkörpern (14), welche von der Andrückkraft eines zwischen dem Fortsatz der Abtriebswelle und den beiden Klemmkörpern eingesetzten Federelementes (15) mit ihren Außenflächen einerseits an der Innenwandung der Gehäusebohrung und andererseits aneinander anliegen, wobei einerseits die Angriffsmittel der Antriebswelle bei antriebsseitigen Drehmomenten die Klemmkörper von ihrer Anlage an der Innenwandung der Gehäusebohrung lösen und andererseits der Fortsatz der Abtriebswelle bei abtriebseitigen Drehmomenten die Klemmkörper gegen die Innenwandung der Gehäusebohrung pressen, wobei die Angriffsmittel (28) der Antriebswelle (12) zwei außermittig angeordnete, vorzugsweise zapfenförmig ausgebildete Vorsprünge sind, die jeweils in eine Öffnung (20) je eines Klemmkörpers (14) axial hineinragen, und dessen Öffnungsweite (W) größer als die Dicke (D) der Vorsprünge (28) ist.

2. Lastdrehmomentsperre nach Anspruch 1, **dadurch gekennzeichnet, dass** die Klemmkörper (14) als Klemmringe ausgebildet sind, in deren Durchgangsbohrungen (20) jeweils einer der beiden Vorsprünge (28) der Antriebswelle (12) mit einem Drehwinkelspiel hineinragt.

3. Lastdrehmomentsperre nach Anspruch 2, **dadurch gekennzeichnet, dass** die Innenwandung (18a) der Gehäusebohrung (18) sowie die Außenwandung (14a) der beiden Klemmringe (14) jeweils mindestens ein Paar axial nebeneinander liegende, konisch verlaufende Klemmflächen (22, 24) haben, die V-förmig zueinander angeordnet sind.

4. Lastdrehmomentsperre nach Anspruch 3, **dadurch gekennzeichnet, dass** die V-förmig zueinander angeordneten Klemmflächen (22, 24) jeweils durch eine axiale Umfangsfläche, insbesondere Zylindermantelfläche (23, 25) voneinander beabstandet sind.

5. Lastdrehmomentsperre nach Anspruch 4, **dadurch gekennzeichnet, dass** die Klemmringe (14) am Außenumfang im Bereich ihrer Zylindermantelfläche (25) eine nutförmige Vertiefung (26) aufweisen, in die jeweils ein Schenkel (15b) des zwischen dem Fortsatz (19) der Abtriebswelle (13) und den Klemmringen (14) eingesetzten zweischenkligen Federelementes (15) ohne radialen Abstand eingreift.

6. Lastdrehmomentsperre nach Anspruch 5, **dadurch gekennzeichnet, dass** der sehnenartig am Umfangsbereich der Gehäusebohrung (18) angeordnete Fortsatz (19) der Abtriebswelle (13) mindestens eine axiale Durchgangsbohrung (20a), vorzugsweise mehrere nebeneinander liegende und zum Teil Schmierstoff enthaltende Durchgangsbohrungen (20) aufweist, von denen die mittlere Durchgangsbohrung (20a) mit einem radial nach innen gerichteten Durchbruch (21) versehen ist, in dem ein ösenförmiger mittlerer Abschnitt (15a) des Federelementes (15) verschwenkbar aufgenommen ist.

7. Lastdrehmomentsperre nach einem der Ansprüche 2 bis 6, **dadurch gekennzeichnet, dass** auf der dem Fortsatz (19) der Abtriebswelle (13) gegenüberliegenden Seite der beiden Klemmringe (14) ein Führungselement (16) in der Gehäusebohrung (18) lose angeordnet ist, welches an der Innenwandung (18a) der Gehäusebohrung (18) sowie an den Außenwandungen (14a) der beiden Klemmringe (14) anliegt.

8. Lastdrehmomentsperre nach Anspruch 7, **dadurch gekennzeichnet, dass** das Führungselement (16) eine dreieckförmige Kontur aufweist, wobei es mit einer konvexen Außenseite (16a) flächig an der Gehäuse-Innenwandung (18a) anliegt und mit zwei zum Gehäusezentrum gerichteten, zueinander symmetrischen konkaven Innenseiten (16b) jeweils an den Außenwandungen (14a) der beiden Klemmringe (14) flächig anliegt.

9. Lastdrehmomentsperre nach Anspruch 8, **dadurch gekennzeichnet, dass** die konvexe Außenseite (16b) des Führungselementes (16) den Klemmflächen (22) der Gehäuse-Innenwandung (18a) angepasste V-förmig angeordnete Führungsflächen (30) mit einem dazwischen liegenden zylindrischen Abschnitt (30a) aufweist und dass die zwei konkaven Innenseiten (16b) jeweils den Klemmflächen (24) der Klemmringe (14) angepasste V-förmig angeordnete Führungsflächen (31) mit einem dazwischen liegenden zylindrischen Abschnitt (31a) aufweisen.

10. Lastdrehmomentsperre nach Anspruch 9, **dadurch gekennzeichnet, dass** die konkaven Führungsflächen (31) des Führungselementes (16) über den Bereich der Berührungsstelle (34) der Klemmringe (14) hinausgeführt sind und in diesem Bereich ein Verbindungsfenster (32) aufweisen, in welchem die beiden Klemmringe (14) aneinander anliegen.

## Claims

1. Load-side torque lock (10) for the automatic locking of load-side torques in the event of the drop or lapse of a drive-side torque, while maintaining the possibility of transmitting drive-side torques from a drive shaft (12) to an output shaft (13) of the torque lock, the said lock consisting of a housing (11) fixed to the frame and having a centric housing bore (18), with a rotatably mounted drive shaft which projects with axially projecting engagement means (28) into the housing bore on the drive side, with a rotatably mounted output shaft which projects with an axially projecting extension (19) in the manner of a chord on the circumferential region of the housing bore into the latter on the output side, and with two clamping bodies (14) which are arranged eccentrically in the housing bore next to one another and which bear with their outer faces, on the one hand, against the inner wall of the housing bore and, on the other hand, against one another due to the pressure force of a spring element (15) inserted between the extension of the output shaft and the two clamping bodies, on the one hand engagement means of the drive shaft releasing the clamping bodies from their bearing contact against the inner wall of the housing bore in the case of drive-side torques, and, on the other hand, the extension of the output shaft pressing the clamping bodies against the inner wall of the housing bore in the case of output-side torques, engagement means (28) of the drive shaft (12) being two eccentrically arranged projections of preferably tenon-shaped design which project axially in each case into an orifice (20) of each clamping body (14), the orifice width (W) of the said orifice being greater than the thickness (D) of the projections (28).

**2.** Load-side torque lock according to Claim 1, **characterized in that** the clamping bodies (14) are designed as clamping rings, in the through-bores (20) of which in each case one of the two projections (28) of the drive shaft (12) projects with a rotary-angle play.

**3.** Load-side torque lock according to Claim 2, **characterized in that** the inner wall (18a) of the housing bore (18) and the outer wall (14a) of the two clamping rings (14) have in each case at least one pair of conically running clamping faces (22, 24) which lie axially next to one another and which are arranged in a V-shaped manner with respect to one another.

**4.** Load-side torque lock according to Claim 3, **characterized in that** the clamping faces (22, 24) arranged in a V-shaped manner with respect to one another are spaced apart from one another in each case by an axial circumferential face, in particular cylinder surface area (23, 25).

**5.** Load-side torque lock according to Claim 4, **characterized in that** the clamping rings (14) have on the outer circumference, in the region of their cylinder surface area (25), a groove-shaped depression (26), into which in each case one leg (15b) of the two-legged spring element (15) inserted between the extension (19) of the output shaft (13) and the clamping rings (14) engages without radial clearance.

**6.** Load-side torque lock according to Claim 5, **characterized in that** the extension (19) of the output shaft (13), the said extension being arranged in the manner of a chord on the circumferential region of the housing bore (18), has at least one axial through-bore (20a), preferably a plurality of partly lubricant-containing through-bores (20) lying next to one another, of which the middle through-bore (20a) is provided with a radially inward-directed perforation (21), in which a lug-shaped middle portion (15a) of the spring element (15) is received pivotably.

**7.** Load-side torque lock according to one of Claims 2 to 6, **characterized in that** a guide element (16) is arranged loosely in the housing bore (18) on that side of the two clamping rings (14) lying opposite the extension (19) of the output shaft (13) and bears against the inner wall (18a) of the housing bore (18) and against the outer walls (14a) of the two clamping rings (14).

**8.** Load-side torque lock according to Claim 7, **characterized in that** the guide element (16) has a triangular contour, and it bears with a convex outside (16a) over a large area against the housing inner wall (18a) and bears with two concave insides (16b), directed towards the housing centre and symmetrical to one another, over a large area in each case against the outer walls (14a) of the two clamping rings (14).

**9.** Load-side torque lock according to Claim 8, **characterized in that** the convex outside (16a) of the guide element (16) has guide faces (30) adapted to the clamping faces (22) of the housing inner wall (18a) and arranged in a V-shaped manner, with a cylindrical portion (30a) lying between them, and **in that** the two concave insides (16b) have in each case guide faces (31) adapted to the clamping faces (24) of the clamping rings (14) and arranged in a V-shaped manner, with a cylindrical portion (31a) lying between them.

**10.** Load-side torque lock according to Claim 9, **characterized in that** the concave guide faces (31) of the guide element (16) are led over the region of the contact point (34) of the clamping rings (14) and in this region have a connecting aperture (32) in which the two clamping rings (14) bear against one another.

**Revendications**

**1.** Système de blocage du couple de charge (10) pour le blocage autonome de couples côté charge en cas de chute ou de disparition d'un couple côté entraînement tout en conservant la possibilité de transmettre des couples côté entraînement depuis un arbre d'entraînement (12) vers un arbre de sortie (13) du système de blocage du couple, constitué d'un carter (11) solidaire du bâti comportant un alésage central (18), un arbre d'entraînement rotatif qui pénètre, côté entraînement, dans l'alésage de carter avec des moyens d'attaque (28) en saillie axiale, un arbre de sortie rotatif ayant un prolongement (19) en saillie axiale qui pénètre dans l'alésage de carter côté sortie à la manière d'un segment d'arc sur la zone périphérique de l'alésage, et deux corps de serrage (14) excentrés juxtaposées dans l'alésage de carter et dont les faces extérieures plaquent, d'une part contre la paroi intérieure de l'alésage de carter et d'autre part l'une contre l'autre par la force de pression exercée par un élément de ressort (15) installé entre le prolongement de l'arbre de sortie et les deux corps de serrage, les moyens d'attaque de l'arbre d'entraînement détachant d'une part les corps de serrage plaqués contre la paroi intérieure de l'alésage de carter en cas de couples côté entraînement, alors que d'autre part le prolongement de l'arbre de sortie presse les corps de serrage contre la paroi intérieure de l'alésage de carter en cas de couples côté sortie, les moyens d'attaque (28) de l'arbre d'entraînement (12) étant deux éléments en saillie excentrés, de préférence en forme de goujon, qui pénètrent chacun axialement dans un orifice (20) de chaque corps de serrage (14), et dont l'ouverture (W) est supérieure à l'épaisseur (D) des ergots (28).

2. Système de blocage du couple de charge selon la revendication 1,
   **caractérisé en ce que**
   les corps de serrage (14) sont des bagues de serrage ayant des perçages traversants (20) dans lesquels pénètre chaque fois l'un des deux ergots (28) de l'arbre d'entraînement (12) avec un jeu d'angle de rotation.

3. Système de blocage du couple de charge selon la revendication 2,
   **caractérisé en ce que**
   la paroi intérieure (18a) de l'alésage de carter (18) ainsi que la paroi extérieure (14a) des deux bagues de serrage (14) ont chacune au moins une paire de surfaces de serrage (22, 24) coniques axialement juxtaposées en V l'une par rapport à l'autre.

4. Système de blocage du couple de charge selon la revendication 3,
   **caractérisé en ce que**
   les surfaces de serrage (22, 24) disposées en V l'une par rapport à l'autre sont séparées l'une de l'autre par une surface périphérique axiale, en particulier la surface d'un corps de cylindre (23, 25).

5. Système de blocage du couple de charge selon la revendication 4,
   **caractérisé en ce que**
   les bagues de serrage (14) présentent, à la périphérie extérieure, au niveau de leur surface de corps de cylindre (25), un creux en forme de rainure (26) dans lequel s'engage, sans jeu radial chaque fois une branche (15b) de l'élément de ressort (15) à deux branches installé entre le prolongement (19) de l'arbre de sortie (13) et les bagues de serrage (14).

6. Système de blocage du couple de charge selon la revendication 5,
   **caractérisé en ce que**
   le prolongement (19) de l'arbre de sortie (13), disposé tel un segment d'arc à la périphérie de l'alésage de carter (18), présente au moins un perçage traversant axial (20a), de préférence plusieurs perçages traversants (20) juxtaposés et contenant en partie un lubrifiant, dont le perçage central (20a) est pourvu d'un passage (21), dirigé vers l'intérieur, dans lequel un tronçon central (15a) en forme d'oeillet de l'élément de ressort (15) est logé de manière à pouvoir pivoter.

7. Système de blocage du couple de charge selon l'une quelconque des revendications 2 à 6,
   **caractérisé en ce qu'**

un élément de guidage (16) est disposé flottant dans l'alésage de carter (18) sur le côté des deux bagues de serrage (14) opposé au prolongement (19) de l'arbre de sortie (13), et cet élément de guidage plaque contre la paroi intérieure (18a) de l'alésage de carter (18) ainsi que contre les parois extérieures (14a) des deux bagues de serrage (14).

8. Système de blocage du couple de charge selon la revendication 7,
   **caractérisé en ce que**
   l'élément de guidage (16) a un contour triangulaire, dont avec un côté extérieur convexe (16a) repose à plat sur la paroi intérieure (18a) du carter, et dont deux côtés intérieurs (16b) concaves, symétriques entre eux, dirigés vers le centre du carter, s'appuient à plat sur chacune des parois extérieures (14a) des deux bagues de serrage (14).

9. Système de blocage du couple de charge selon la revendication 8,
   **caractérisé en ce que**
   le côté extérieur convexe (16b) de l'élément de guidage (16) présente des surfaces de guidage (30), disposées en V, adaptées aux surfaces de serrage (22) de la paroi intérieure (18a) du carter et entre lesquelles repose un tronçon cylindrique (30a), et les deux côtés intérieurs concaves (16b) présentent respectivement des surfaces de guidage (31), disposées en V, adaptées aux surfaces de serrage (24) des bagues de serrage (14), et entre lesquelles repose un tronçon cylindrique (31a).

10. Système de blocage du couple de charge selon la revendication 9,
    **caractérisé en ce que**
    les surfaces de guidage concaves (31) de l'élément de guidage (16) dépassent de la zone du point de contact (34) des bagues de serrage (14) et présentent, dans cette zone, une fenêtre de liaison (32) dans laquelle les deux bagues de serrage (14) plaquent l'une contre l'autre.

Fig. 1

EP 1 802 879 B1

Fig. 2

EP 1 802 879 B1

Fig. 3

Fig. 4

Fig. 6

Fig. 5

EP 1 802 879 B1

## Fig. 7

## Fig. 8

EP 1 802 879 B1

Fig. 9

Fig. 10a

## Fig. 10b

## Fig. 10c

# Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6229233 B1

- WO 03054409 A